(19) Europäisches Patentamt
European Patent Office
Office européen des brevets

(11) Publication number: **0 183 119 B1**

(12) # EUROPEAN PATENT SPECIFICATION

(45) Date of publication of patent specification: **20.03.91**

(51) Int. Cl.$^5$: **C08F 20/36**, C08F 299/06

(21) Application number: **85114325.5**

(22) Date of filing: **11.11.85**

(54) **Polymers based on ethylenically unsaturated monomers modified with oligourethanes and aqueous dispersions obtained therefrom.**

(30) Priority: **12.11.84 IT 2353384**

(43) Date of publication of application:
**04.06.86 Bulletin 86/23**

(45) Publication of the grant of the patent:
**20.03.91 Bulletin 91/12**

(84) Designated Contracting States:
**AT BE DE FR GB NL**

(56) References cited:
**EP-A- 0 098 752**
**DE-A- 1 953 349**
**GB-A- 1 428 454**

(73) Proprietor: **AUSCHEM S.p.A.**
**31, Foro Buonaparte**
**Milan(IT)**

Proprietor: **CONSIGLIO NAZIONALE DELLE RICERCHE**
**Piazzale Aldo Moro, 7**
**I-00198 Roma(IT)**

(72) Inventor: **Trovati, Aldo**
**1, via Borsi**
**I-28100 Novara(IT)**
Inventor: **Gambini, Tiziana**
**66, viale Lombardia**
**I-21053 Castellanza Varese(IT)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**W-8000 München 40(DE)**

EP 0 183 119 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### BACKGROUND OF THE INVENTION

Aqueous dispersions of polymers or copolymers based on vinyl and/or acrylic monomers are known and widely utilized.

To prepare said dispersions, the monomers containing $\alpha$-$\beta$-ethylenically unsaturated bonds are pre-emulsified in water with the aid of surfactants and the resulting emulsion is subjected to polymerization in the presence of known radical starters (initiators). The action of the surfactants is that of stabilizing both the monomers, which are mostly insoluble in water, in the form of emulsified droplets, and the particles of finished polymer.

The drawback due to the necessity of using these compounds consists in the fact that they are characterized by a high hydrophilicity, often have a low compatibility with the polymer and, owing to their low molecular weight, which generally ranges from 100 to 300, exhibit a considerable tendency to migration. The result is that the films deriving from such polymeric emulsions are often affected by defects due to microheterogeneity and to high sensitivity to water.

Various attempts have been made with a view to avoid the use of low molecular weight surfactants subject to migration, but none of the proposed processes has permitted to obtain satisfactory results. Thus, in British patent 1,553,721 there are described aqueous emulsions of vinyl copolymers modified with compounds endowed with a surface-activating action and containing a double bond of the copolymerizable $\alpha$-$\beta$-unsaturated type, such as, e.g., mixtures of mono- and di-esters of phosphoric acid with hydroxyalkyl-methacrylates.

However, the use of such copolymerizable unsaturated surfactants does not permit to thoroughly avoid the use of the conventional surfactants, as the abovesaid phosphoric esters do not make possible the obtainment of a pre-emulsion having a sufficient stability for the subsequent polymerization in emulsion.

To overcome this drawback, British patent 1,553,722 proposes to utilize the above-cited phosphoric acid esters further esterified with ethoxylated nonyl-phenols. The use of such further esterified comonomers enables to obtain stable pre-emulsions and, in consequence, aqueous polymeric dispersions without migrable surfactants; however, the polyoxyethylene chains do nevertheless represent points of attack by the water.

Also known is the polymerization of $\alpha$-$\beta$-ethylenically unsaturated monomers in the presence of hydrodispersed polyurethanes, of the ionomeric type.

Thus, for example, it is known how to polymerize $\alpha$-$\beta$-ethylenically unsaturated monomers in the presence of anionic water-dispersed polyurethanes containing carboxylic groups salified with tertiary amines (USP 4,198,330), or of cationic water-dispersed polyurethanes containing quaternary ammonic groups modified with acrylic and/or vinylic polymers polymerized thereon (British patent 1,316,310).

These processes permit to obtain polymers in water dispersions, which are stable also in the absence of low molecular weight surfactants; however, they do not permit to solve the problem of the micro-heterogeneity of the films, as the water-dispersed polymer prevailingly consists of polyurethane macromolecules, in which acrylic or vinylic macromolecules are incorporated.

### THE PRESENT INVENTION

It is an object of the present invention to provide polymers based on ethylenically unsaturated monomers, modified in such manner as to make them suitable for the preparation of aqueous dispersions stable even in the complete absence of low molecular weight surfactants, and practically free from the above-mentioned drawbacks.

We have now found that this and still other objects are achieved by using a polymer based on one or more $\alpha$-$\beta$-ethylenically unsaturated monomers and modified with at least 5% by weight of an oligourethane containing hydrolyzable groups and terminal $\alpha$-$\beta$-unsaturated functional groups of acrylic and/or methacrylic nature.

The modified polymers, object of the present invention, are prepared by carrying out the polymerization of one or more $\alpha$-$\beta$-ethylenically unsaturated monomers in the presence of a water-dispersion of oligourethanes containing ionizable groups and terminal $\alpha$-$\beta$-unsaturated functional groups of acrylic and/or methacrylic nature.

Oligourethanes having a molecular weight ranging from 2,000 to 50,000 and containing at least two ethylenically unsaturated terminal groups are preferred.

The presence of α-β-unsaturated groups in the oligourethanes secures a good copolymerization with the ethylenically unsaturated monomers, thus permitting the formation of homogeneous macromolecular structures. These oligourethanes, which contain acrylic and/or methacrylic terminal unsaturated groups, may be used in an amount of 5 to 60% by weight with respect to the finished copolymer. Generally, the higher the oligourethane amount, the higher the chemical and physical stability characteristics of the films, such characteristics being due to the increase in the cross-linking degree of the finished polymer.

The high cross-linking degree of the polymer depends both on the ethylenic difunctionality of the oligourethane and on the well-known tendency of the urethane groups to form transversal bonds through the formation of hydrogen bonds. In practice, preferred amounts are those ranging from 10 to 60% by weight.

The oligourethanes containing acrylic and/or methacrylic unsaturated terminal groups can be prepared according to the process described in European patent application No. 83 303 856.5.

This process consists in preparing first a polyisocyanic prepolymer by reacting, at a temperature not exceeding 100 °C, an organic diisocyanate with a mixture consisting of a diol containing ionizable groups and of an essentially linear macroglycol, haying a molecular weight ranging from 500 to 5,000, in such amounts that the molar ratio between the isocyanic groups and the sum of the hydroxyl groups of the macroglycol and of the diol may range from 1.2 to 2.0, and in subsequently reacting the resulting polyisocyanic prepolymer with a hydroxy-alkyl-acrylate and/or a hydroxy-alkyl-methacrylate having the formula:

$$CH_2=\underset{R}{\underset{|}{C}}-COOX \qquad (I)$$

in which R is hydrogen or $-CH_3$ and X is a hydroxy-alkyl radical containing 1 to 8 carbon atoms, at a temperature below 150 °C. Thus the hydroxy-alkyl radical may be derived from a methyl-, ethyl-, propyl-, butyl-, pentyl-, hexyl-, heptyl- or octyl group being straight chain or branched groups.

The amount of hydroxy-alkyl-acrylate or methacrylate of formula (I) is adjusted as a function of the content of free isocyanic groups still present in the polyisocyanic prepolymer, in such manner that the ratio in NCO/OH equivalents may range from 0.2 to 1.1 and preferably from 0.4 to 0.6.

The formation of the polyisocyanic prepolymer and the subsequent reaction with hydroxy-alkyl-acrylate and/or methacrylate of formula (I) can be conducted in the complete absence of organic solvents and either or not in the presence of conventional catalysts such as stanno-organic compounds, tertiary amines.

For preparing the polyisocyanic prepolymer there may be used the macroglycols having a molecular weight ranging from 500 to 5,000, preferably from 800 to 3,000, selected from among saturated polyesters, polyethers and polyesters-urethanes.

Examples of useful macroglycols are: the polyesters prepared by polycondensation of bicarboxylic, preferably aliphatic, acids or anhydrides having from 4 to 9 carbon atoms with aliphatic diols having 2 to 8 carbon atoms either alone or in admixture with one another; the polyesters prepared by polycondensation on diol starters of ε-caprolacton; the products of the polyaddition of the above-mentioned polyesters with organic diisocyanates in low molar amount; polyethylene glycol; polypropylene glycol; the polymerization products of tetrahydrofuran, etc. These macroglycols can be used either alone or in admixture with small amounts of a low molecular weight polyol, preferably of the trifunctional type, such as trimethylolpropane, glycerine, 1,2,6-hexan-triol.

The utilizable organic diisocyanates may be indifferently of the aromatic, aliphatic and cycloaliphatic type; the aliphatic and cycloaliphatic diisocyanates being preferred when high stability characteristics to U.V. radiations and to hydrolytic degradation are to be obtained.

Examples of utilizable diisocyanates are: 2,4-toluenediisocyanate either alone or in admixture with the 2,6-toluenediisocyanate isomer; 4,4'-diphenyl-methanediisocyanate; hexamethylene diisocyanate; 4,4'-dicyclohexyl-methanediisocyanate; 1-isocyanate-3-isocyanate-methyl-3,5,5-trimethyl-cyclohexane (or isophorondiisocyanate); 2,2,4-trimethyl-hexamethylene diisocyanate in admixture with the 2,4,4-trimethyl-hexamethylene diisocyanate isomer.

As ionizable diols there are utilizable those capable of imparting a preferentially anionic charge to the polyurethane macromolecule, such as, for example: the diols containing at least a free carboxylic group; the diols containing at least a phosphonic group; the diols containing at least a sulphonic group. In practice, it is preferable to use diols containing at least a free carboxylic group bound to the same carbon atom which carries the two methylol groups, for example, dimethylolacetic acid, dimethylolpropionic acid and dimethylolbutyric acid.

The ionizable free groups, statistically distributed on the oligourethane chain, are subsequently salified

either by inorganic bases, such as sodium hydroxide, potassium hydroxide or ammonium hydroxide, or, preferably, by means of tertiary amines or tertiary alkanolamines, such as triethylamine, dimethyl-ethanolamine, methyl-diethanolamine.

The oligourethane salification can be carried out by simple addition of the salifying agent as such or dissolved in water and/or solvents at temperatures around 60 °C. Should the oligourethane have too high viscosities at such temperatures, then it would be advisable to dilute it, prior to salification, preferably with water-miscible solvents and with a boiling temperature lower than water, in order to accomplish the removal by distillation.

The amount of solvent usually employed does not exceed a fifth of the oligourethane weight. The preferred solvents are acetone, methylethylketone, tetrahydrofuran.

Once the salification has occurred, optionally after dilution of the organic solvents as described herein, the oligourethane is dilutable with water in any ratio. Therefore, it is dispersed in water, in order to get oligourethane concentrations which are variable as a function of the ionizable groups content. The preferred concentrations are those from 20 to 60% by weight, and preferably from 30 to 50% by weight.

The unsaturated oligourethane, either dissolved or dispersed in water as described hereinabove, can be then copolymerized with $\alpha$-$\beta$-ethylenically unsaturated monomers according to conventional radical polymerization techniques.

Since such unsaturated oligourethanes do not contain specifically hydrophilic segments, their emulsifying power is rather low, wherefore it is not easy to utilize them as stabilizers for pre-emulsions of hydrophobic $\alpha$-$\beta$-ethylenically unsaturated monomers. Thus, it is advisable to carry out the polymerization by feeding the monomer or the mixture of $\alpha$-$\beta$-ethylenically unsaturated monomers as such into the water-dispersion of the preformed oligourethane.

Surprising, on the contrary, appears the stabilizing action exerted by the oligourethanes on the finished product particles, even if present in low concentrations, such as 10% by weight.

The term "$\alpha$-$\beta$-ethylenically unsaturated monomers", as used in the present specification and in the claims, means a compound containing the bond:

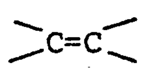

which can be polymerized or copolymerized with another analogous comonomer in the presence of the unsaturated oligourethane dissolved or dispersed in water, of the type cited herein, by using radical catalysts.

Examples of $\alpha$-$\beta$-ethylenically unsaturated monomers are: the esters of the acrylic and methacrylic acids, such as ethyl acrylate, butyl acrylate, 2-ethyl-hexyl acrylate, cyclohexyl-chloro-acrylate, isobutyl-chloro-acrylate, methyl-chloroacrylate, methyl-methacrylate, butyl-methacrylate, stearyl-methacrylate, phenyl-methacrylate, isopropyl-methacrylate, cyclo-hexyl-methacrylate, 3,3-dimethyl-2-butyl-methacrylate, acrylonitrile, methacrylonitrile, the corresponding amides such as acrylamide and methacrylamide, optionally in the methylolated and/or subsequently esterified form with monovalent alcohols $C_1$-$C_4$; vinyl esters and ethers such as vinyl acetate, vinyl propionate, vinyl chloride, vinylidene chloride, vinyl-ethyl-ether; aromatic compounds such as styrene, vinyl-toluene, 4-methyl-styrene, 4-methoxy-styrene, 3,4-dimethyl styrene, 2,6-dichloro-styrene, 2,4-dichloro-styrene, 2-chloro-styrene, 3-chloro-styrene, 4-chloro-styrene, 4-chloro-2-methyl-styrene; allyl compounds such as allyl alcohol, allyl acetate It is also possible to utilize the monomers containing two or more ethylenically unsaturated groups, such as butandiol diacrylate and dimethacrylate, hexandiol diacrylate and dimethacrylate, trimethylolpropane triacrylate and trimethacrylate, pentaerythritol triacrylate and trimethacrylate. The $\alpha$-$\beta$-ethylenically unsaturated monomers are polymerized in the presence of the aqueous solution or dispersion of unsaturated oligourethanes according to conventional polymerization-in-emulsion techniques and using the well-known radical polymerization initiators such as potassium and ammonium persulphates, hydrogen peroxide, alkyl hydroperoxides such as terbutyl hydroperoxide, cumene hydroperoxide, p-menthane hydroperoxide di-cumyl peroxide, benzoyl peroxide, azo-bis-isobutyronitrile.

Preferably, these initiators are employed in the presence of known reducing agents in order to reduce the radical decomposition temperature, such as sodium metabisulphite, sodium-formaldehyde sulphoxylate, formic acid, ascorbic acid.

Examples of initiator/reducer couples which are preferred in the practice of the present invention are: tertbutyl-hydroperoxide/sodium-formaldehyde sulphoxylate and hydrogen peroxide/ascorbic acid.

The initiator amounts employed range from 0.01 to 1%, preferably from 0.05 to 0.2% by weight referred

to the total weight of the monomers.

The feeding time of both the monomers and the initiator may vary from 2 to 8 hours, preferably from 3 to 5 hours, taking care to feed the initiator in a time exceeding by 30-60 minutes the feeding time of the monomers.

The polymerization temperatures depend both on the nature of the monomers employed and on the catalyst system utilized; they are generally in the range of from 40 to 90 °C, preferably from 40 to 70 °C.

On conclusion of the initiator and/or catalytic couple feeding, the copolymerization is usually concluded.

The final aqueous dispersions containing from 20 to 60% by weight of dry polymer are characterized by high stability to storage, even in the full absence of low molecular weight surfactants. Such dispersions, due to their high surface tension, are also characterized by a low tendency to form foams, highly appreciated in the preparation of formulates containing pigments, dyestuffs, fillers.

In fact, the polymeric dispersions according to this invention are profitably utilized in the field of varnishes, paints, dressing of hides, finishing of fabrics, of adhesives, due to their tendency to provide, simply by water evaporation, films of different hardness, flexibility, tenacity, elasticity, depending on the great variety of the starting components.

If desired, the final aqueous dispersions can be subjected to coagulation processes, for example, by addition of electrolytes, or to spray-drying processes for obtaining the polymer in the dry state.

The following examples, which are given merely for clarification purposes, to illustrate the invention in more detail, are not intended to be limiting.

Unless otherwise specified, all parts, percentages and ratios indicated in the examples are by weight.

Preparation of oligourethane A

Into a reactor equipped with stirrer, thermometer, reflux cooler, temperature adjusting system and dry nitrogen blanketing system, there were charged in the given order: 260 g (0.26 mole) of polyoxytetramethylene glycol (a product of Du Pont de Nemours known under the Trademark Tarathane 1000); 16.08 g (0.12 mole) of dimethylolpropionic acid; 0.076 g of benzoyl chloride (as prepolymer stabilizer), and 86.29 g (0.513 mole) of hexamethylene diisocyanate.

The exothermicity of the reaction was regulated by keeping the mass under stirring at a temperature around 60 °C during 30 minutes; then the temperature was brought to 80 °C and maintained such until the content of free isocyanic groups had decreased to 3.6-3.8% by weight. To the so obtained prepolymer, cooled down to about 60 °C and diluted with 90 $cm^3$ of anhydrous acetone, there were added 17.29 g (0.133 mole) of 2-hydroxy-propyl acrylate, while changing the atmosphere from nitrogen to dry air. The temperature was maintained at about 60 °C until obtainment of a content of free isocyanic groups of 1.7-1.9% by weight. During 5 minutes and under intense stirring there was added an aqueous solution of 10.7 g of dimethylethanolamine in 250 g of deionized water, immediately followed by further 635 g of deionized water. It was then proceeded to the distillation under vacuum of the existing acetone.

The final dispersion had a dry content of 31% by weight, which consisted of an unsaturated oligourethane containing 30.7 milliequivalents of salified carboxylic groups per 100 g of dry matter and having a calculated molecular weight of about 5,500.

Preparation of oligourethane B

According to modalities similar to those described hereinbefore there was prepared a polyisocyanic prepolymer having the following composition:

| | | |
|---|---|---|
| bisphenol A propoxylate (hydroxyl number = 123 mg KOH/g) | 332.1 | g |
| dimethylolpropionic acid | 22.5 | g |
| benzoyl chloride | 0.076 | g |
| hexamethylene-diisocyanate | 120.7 | g. |

When the content of free isocyanic groups had reached a value of 4-4.1% by weight, 119 g of anhydrous acetone were added, the mass was thermoregulated at 60 °C and 24.2 g of 2-hydroxypropylacrylate were added in a dry air atmosphere. The whole was maintained at about 60 °C until the content of free isocyanic groups decreased to 1.8-1.9% by weight. Under intense stirring, a solution of 14.98 g of dimethylethanolamine in 375 g of deionized water was added and, immediately after, a further 825 g of deionized water were added. Acetone was then removed under low vacuum ($1.33 \cdot 10^4$-$2.66 \cdot 10^4$ Pa(100-200 mm of Hg)) at a maximum temperature of about 70 °C.

The final product was a latex with a dry matter content of 30.2% of an unsaturated oligourethane containing about 32.7 meq of salified carboxylic groups per 100 g of dry oligomer and having a calculated average molecular weight of about 5,300.

EXAMPLE 1

145.2 g of the oligourethane A dispersion and 600 g of deionized water were charged into a reactor equipped with stirrer, thermometer, cooler, proportioning funnels, blanketed with nitrogen and immersed in a thermostatic bath, after which the whole was thermoregulated at 50 °C.

Three dropping funnels containing, respectively:

405 g of a l/l-by-weight mixture consisting of butyl acrylate and methylmethacrylate;

3.75 g of t.butyl hydroperoxide in an aqueous solution at 12% by weight, diluted in 125 g of deionized water; and

0.225 g of sodium-formaldehyde sulphoxylate dissolved in 125 g of deionized water,

were arranged onto the reactor.

About 20 g of the monomer mixture and about 12 g of the aqueous solutions of starter and reducer were simultaneously fed from the dropping funnels. After the reaction started - evidenced by a spontaneous temperature increase of about 3-4 °C - the three feedings were effected in such manner that the monomer mixture was exhausted over a period of 3 hours and the two solutions of the catalytic couple over a period of 3.5 hours. During the feedings, the temperature was maintained at about 54-55 °C.

About 60 minutes after the end of the couple feeding, the gas-chromatographic analysis revealed a substantial absence of free monomers. The final dispersion was practically free from precoagulation, had a dry matter content of 30.8% by weight, a surface tension of $62 \cdot 10^{-3}$ N/m(dyne/cm) and proved to be stable to storage during several months, even at temperatures higher than 50 °C, in spite of the low content (10% by weight) of oligourethane. By drying in air, said dispersion gave rise to the formation of a tough and transparent film which, after a 24-hour immersion in water at room temperature, increased in weight by only 6% and retained its transparency. By way of comparison, a conventional acrylic emulsion with analogous monomeric composition provided films, which, after immersion in water under the same conditions as mentioned herein, increased their weight by more than 20%, while assuming, furthermore, a very opaque appearance.

EXAMPLE 2

According to modalities like those of Example 1, a dispersion was prepared conforming to the following recipe:

| | | |
|---|---|---|
| oligourethane A | 580.6 | g |
| deionized water | 300. | g |
| ethyl-hexylacrylate/methylmethacrylate 1/1 by weight | 270. | g |
| t.butyl-hydroperoxide at 12% by weight | 3.75 | g |
| in deionized water | 125. | g |
| sodium-formaldehyde sulphoxylate | 0.225 | g |
| in deionized water | 125. | g |

The polymerization temperature was maintained at 53-55° C during a 4-hours feeding of the monomers and a 4.5-hours feeding of the catalytic couple.

The final dispersion, containing the polymer, practically odorless and free from coagula, had a surface tension of $59.5 \cdot 10^{-3}$ N/m(dyne/cm) and a dry matter content of 30.2% by weight. The dispersed polymer contained about 40% of copolymerized oligourethane.

After evaporation of water, the dispersion provided films endowed with a high elasticity, transparent and colorless, which, after immersion in water during 24 hours at room temperature, exhibited a weight increase of 4.8% and retained unaltered their appearance.

The dispersion is advantageously utilizable in the dressing of hides.

EXAMPLE 3

Following the same operating modalities as described in Example 1, an aqueous dispersion according to the following recipe was prepared:

| | | |
|---|---|---|
| oligourethane B | 993. | g |
| methylmethacrylate | 200. | g |
| t.butyl hydroperoxide at 12% by weight | 4.17 | g |
| in deionized water | 125. | g |
| sodium-formaldehyde sulphoxylate | 0.25 | g |
| in deionized water | 125. | g |

The final dispersion, containing 34.5% by weight of dry product, provided very hard and tough films and, as such, was utilizable as primer and/or finishing for wood characterized by a high resistance to water, solvents and abrasions. The dispersed polymer contained about 60% of copolymerized oligourethane.

## Claims

1. Polymers of $\alpha,\beta$-ethylenically unsaturated monomers modified with from 5 to 60% by weight, extremes included, of an oligourethane containing ionizable groups and functional $\alpha,\beta$-unsaturated end groups derived from acrylic and methacrylic compounds.

2. The polymers according to claim 1, in which the oligourethane has a molecular weight from 2,000 to 50,000, extremes included, and contains at least two ethylenically unsaturated terminal groups.

3. The polymers according to one or both of the claims 1-2, in which the oligourethane contains ionizable groups selected from carbcxylic, phosphonic and sulphonic groups, optionally salified.

4. The polymers according to one or more of the claims 1 to 3, in which the oligourethane content is from 10 to 60% by weight, extremes included, with respect to the final polymer.

5. The polymers according to one or more of the claims 1- 4, comprising an oligourethane obtained by first preparing a polyisocyanic prepolymer by reacting an organic diisocyanate with a mixture consisting of a diol containing ionizable groups and of an essentially linear macroglycol having a molecular weight ranging from 500 to 5,000, extremes included, in such amounts that the molar ratio between the isocyanic groups and the sum of the hydroxyl groups of the diol and of the macroglycol is 1.2 to 2, and by subsequently reacting the polyisocyanic prepolymer with a compound having the formula:

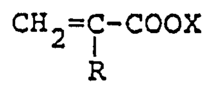

in which R is hydrogen or $-CH_3$ and X is a hydroxy-alkyl radical containing 1 to 8 carbon atoms.

6. A process for preparing modified polymers based on $\alpha,\beta$-unsaturated monomers, according to one or more of the claims 1-5, characterized by carrying out the polymerization of one or more $\alpha,\beta$-ethylenically unsaturated monomers in the presence of an aqueous dispersion of oligourethanes containing ionizable groups and functional $\alpha,\beta$-unsaturated terminal groups derived from acrylic and methacrylic compounds in the presence of a radical catalyst.

7. Aqueous dispersions, storage stable and free of low molecular weight surfactants, containing from 20 to 60% by weight of a polymer of one or more $\alpha,\beta$-ethylenically unsaturated monomers, said polymer being, modified with from 5 to 60% by weight of an oligourethane containing ionizable groups and functional $\alpha,\beta$-unsaturated terminal groups derived from acrylic and methacrylic compounds.

**Revendications**

1. Polymères de monomères $\alpha,\beta$-éthyléniquement insaturés, caractérisés en ce qu'ils sont modifiés avec 5 à 60% en poids, limites incluses, d'un oligouréthane contenant des groupes ionisables et des groupes terminaux fonctionnels $\alpha,\beta$-insaturés dérivés de composés acryliques et méthacryliques.

2. Les polyméres suivant la revendication 1, caractérisés en ce que l'oligouréthane a un poids moléculaire de 2,000 à 50,000, limites incluses, et contient au moins deux groupes terminaux éthyléniquement insaturés.

3. Les polymères suivant l'une quelconque des revendications 1-2 caractérisés en ce que l'oligouréthane contient des groupes ionisables choisis parmi les groupes carboxyliques, phosphoniques et sulfoniques, éventuellement salifiés.

4. Les polymères suivant l'une quelconque des revendications 1 à 3, caractérisés en ce que la teneur en oligouréthane est de 10 à 60% en poids, limites incluses, par rapport au polymère final.

5. Les polymères suivant l'une quelconque des revendications 1 à 4, caractérisés en ce qu'ils comprennent un oligouréthane obtenu par préparation préalable d'un prepolymère polyisocyanique par réaction d'un diisocyanate organique avec un mélange comprenant un diol contenant des groupes ionisables et un macroglycol essentiellement linéaire, ayant un poids moléculaire compris entre 500 et 5000, limites incluses, en des quantités telles que le rapport molaire entre les groupes isocyaniques et la somme des groupes hydroxy du macroglycol et du diol se trouve dans la gamme de 1,2 à 2,0, et réaction ultérieure du prépolymère polyisocyanique résultant avec un composé de formule:

$$CH_2 = \underset{\displaystyle R}{\overset{}{C}} - COOX \qquad (I)$$

dans laquelle R est un atome d'hydrogène ou un groupe $-CH_3$ et X est un radical hydroxyalkyle contenant 1 à 8 atomes de carbone.

6. Un procédé pour préparer des polyméres modifiés à base de monomères $\alpha,\beta$-insaturés suivant l'une quelconque des revendications 1 à 5, caractérisé en ce qu'on effectue la polymérisation d'un ou de plusieurs monomères $\alpha,\beta$-éthyléniquement insaturés en présence d'une dispersion aqueuse d'oligouréthanes contenant des groupes ionisables et des groupes terminaux $\alpha,\beta$-insaturés fonctionnels dérivés de composés acryliques et méthacryliques, en présence d'un catalyseur radicalaire.

7. Dispersions aqueuses, stables au stockage et exemptes de tensioactifs de bas poids moléculaire, caractérisées en ce qu'elles contiennent de 20 à 60% en poids d'un polymère d'un ou de plusieurs monomères $\alpha,\beta$-éthyléniquement insaturés, ce polymère étant modifié avec 5 a 60% en poids d'un oligouréthane contenant des groupes ionisables et des groupes terminaux $\alpha,\beta$-insaturés fonctionnels dérivés de composés acryliques et méthacryliques.

**Ansprüche**

1. Polymere aus $\alpha,\beta$-ethylenisch ungesättigten Monomeren, die mit von 5 bis 60 Gew.-%, Grenzwerte eingeschlossen, eines Oligourethans, das ionisierbare Gruppen und von Acryl- und Methacrylverbindungen abgeleitete funktionelle $\alpha,\beta$-ungesättigte Endgruppen enthält, modifiziert sind.

2. Polymere nach Anspruch 1, in welchen das Oligourethan ein Molekulargewicht von 2 000 bis 50 000, Grenzwerte eingeschlossen, hat und mindestens zwei ethylenisch ungesättigte Endgruppen enthält.

3. Polymere nach einem oder beiden der Ansprüche 1 und 2, in welchen das Oligourethan ionisierbare Gruppen, ausgewählt aus Carboxyl-, Phosphon- und Sulfongruppen, die wahlweise in Salzform vorliegen, enthält.

4. Polymere nach einem oder mehreren der Ansprüche 1 bis 3, in welchen der Oligourethangehalt 10 bis 60 Gew.-%, Grenzwerte eingeschlossen, bezogen auf das endgültige Polymer, beträgt.

5. Polymere nach einem oder mehreren der Ansprüche 1 bis 4, die ein Oligourethan enthalten, das erhalten wurde, indem zuerst ein Polyisocyanat-Prepolymer durch Umsetzen eines organischen Diisocyanates mit einer Mischung aus einem ionisierbare Gruppen enthaltenden Diol und einem im wesentlichen linearen Makroglykol mit einem Molekulargewicht von 500 bis 5 000, Grenzwerte eingeschlossen, hergestellt wird, wobei die Umsetzung in solchen Mengen erfolgt, daß das molare Verhältnis zwischen den Isocyanatgruppen und der Summe der Hydroxylgruppen des Diols und des Makroglykols 1,2 bis 2 beträgt, und das Polyisocyanat-Prepolymer anschließend mit einer Verbindung der Formel

$$CH_2 = \underset{\displaystyle R}{C} - COOX$$

in welcher R Wasserstoff oder $-CH_3$ ist und X ein Hydroxyalkylradikal mit 1 bis 8 Kohlenstoffatomen ist, umgesetzt wird.

6. Verfahren zur Herstellung modifizierter Polymere auf der Basis von $\alpha,\beta$-ungesättigten Monomeren nach einem oder mehreren der Ansprüche 1 bis 5, dadurch gekennzeichnet, daß man die Polymerisation eines oder mehrerer $\alpha,\beta$-ethylenisch ungesättigter Monomere in Anwesenheit einer wässrigen Dispersion von Oligourethanen, die ionisierbare Gruppen und von Acryl- und Methacrylverbindungen abgeleitete funktionelle $\alpha,\beta$-ungesättigte Endgruppen enthalten, und in Anwesenheit eines Radikalkatalysators durchführt.

7. Wässrige Dispersionen, die lagerbeständig und von niedermolekularen oberflächenaktiven Mitteln frei sind und von 20 bis 60 Gew.-% eines Polymers aus einem oder mehreren $\alpha,\beta$-ethylenisch ungesättigten Monomeren enthalten, wobei das Polymer mit 5 bis 60 Gew.-% eines Oligourethans modifiziert ist, das ionisierbare Gruppen und von Acryl- und Methacrylverbindungen abgeleitete funktionelle $\alpha,\beta$-ungesättigte Endgruppen enthält.